# EUROPÄISCHE PATENTSCHRIFT

(11) **EP 3 325 844 B1**
(45) Veröffentlichungstag und Bekanntmachung des Hinweises auf die Patenterteilung: **09.09.2020**
(21) Anmeldenummer: 16760644.1
(22) Anmeldetag: 06.07.2016
(51) Int. Cl.: F16G 13/06, C23C 8/02, C23C 8/70, C23C 16/02, C23C 16/40, C23C 28/04, C23C 8/10, C23C 28/00

(54) **KETTENELEMENT UND VERFAHREN ZUR HERSTELLUNG DESSELBEN**
CHAIN ELEMENT AND METHOD FOR PRODUCTION THEREOF
ÉLÉMENT DE CHAÎNE ET SON PROCÉDÉ DE FABRICATION

(30) Priorität: 23.07.2015 DE 102015213966
(43) Veröffentlichungstag der Anmeldung: 30.05.2018
(73) Patentinhaber: Schaeffler Technologies AG & Co. KG, 91074 Herzogenaurach (DE)
(72) Erfinder: POIRET, Christian, 62137 Coulogne (FR); ASGAR POUR KHEZER ABAD, Monir, 62720 Rinxent (FR)
(86) Internationale Anmeldenummer: PCT/DE2016/200311
(87) Internationale Veröffentlichungsnummer: WO 2017/012621

(56) Entgegenhaltungen:
- WO-A1-2014/044418
- DE-A1- 19 822 928
- US-A- 5 840 132
- SHAH FAIZ ULLAH ET AL: "Boron in Tribology: From Borates to Ionic Liquids", TRIBOLOGY LETTERS, BALTZER SCIENCE PUBLISHIERS, NL, Bd. 51, Nr. 3, 17. Juli 2013 (2013-07-17), Seiten 281-301, XP035350074, ISSN: 1023-8883, DOI: 10.1007/S11249-013-0181-3 [gefunden am 2013-07-17]

## Beschreibung

Die vorliegende Erfindung betrifft ein Kettenelement und eine Kette mit mindestens einem solchen Kettenelement. Ferner betrifft die Erfindung ein Verfahren zur Herstellung eines Kettenelements.

Gattungsgemäße Kettenelemente werden z. B. als Kettenantriebe oder Teile entsprechender Kettenantriebe zur Übertragung von Kräften verwendet und kommen in einer Vielzahl an unterschiedlichen Gebieten der Technik, wie beispielsweise im Bereich der Kraftfahrzeugtechnik, zum Einsatz.

Kettenelemente sind aufgrund der, bei deren Betrieb herrschenden hohen mechanischen Beanspruchungen üblicherweise aus mechanisch besonders beanspruchbaren Stählen gebildet. Weiterhin ist es bekannt, Kettenelemente, insbesondere in den, andere Kettenelemente oder sonstige Bauteile kontaktierenden Bereichen, mit einer, die mechanischen Eigenschaften beeinflussenden Oberflächenmodifizierung, insbesondere Oberflächenhärtung, zu versehen, worunter beispielsweise eine verschleißfeste und gegenüber korrosiven Medien stabile Beschichtung zu verstehen ist. Eine entsprechende Oberflächenmodifizierung, d. h. insbesondere die Ausbildung einer besonderen Randschicht, kann beispielsweise dazu dienen, dem Grundmaterial des Kettenelements im Bereich seiner Oberfläche ein verändertes Eigenschaftsspektrum zu verleihen. So kann beispielsweise ein Material, insbesondere ein Stahl, mit einer bestimmten Festigkeit und Zähigkeit mit einer besonders verschleißfesten und korrosionsstabilen Randschicht versehen und so gezielt in seinen mechanischen Eigenschaften verändert werden. Bekannte Verfahren zur Modifizierung der Oberfläche von Stählen, d.h. zur Ausbildung entsprechender Randschichten, sind beispielsweise Aufkohlen (Carburieren), Nitrieren und/oder die Aufbringung von auf Titan oder Molybdän basierenden Beschichtungen.

Allerdings sind die durch entsprechende Prozesse ausgebildeten Randschichten im Hinblick auf die besonders verschleißintensiven und gegebenenfalls zusätzlich korrosiv wirkenden Bedingungen im Anwendungsbereich entsprechender Kettenelemente, welche sich z. B. durch Kontaminierung mit Schmiermitteln oder Schmiermittelrückständen oder Verbrennungsrückständen von Verbrennungsmotoren ergeben, für die spätere Anwendung häufig nicht oder nur bedingt zufriedenstellend.

Die Reibung ist einer der bedeutendsten Gründe für den Treibstoffverbrauch von Maschinen, insbesondere von Kraftfahrzeugen. Einige Studien zeigen, dass der Anteil der aufgrund von Reibung verlorengegangenen Energie bis auf 40% steigen kann. Verschiedene Verfahren können zur Reduzierung der Reibung herangezogen werden. So haben z.B. einige Oberflächenbeschichtungen einen geringen Reibungskoeffizienten. Ebenso kann die Oberflächenbehandlung die Reibung zwischen zwei Komponenten reduzieren. Zusätzlich zu der Oberflächenbeschichtung gibt es ferner die Technik der Veränderung der Oberflächenzusammensetzung, so dass dadurch Oberflächen-Schichten entstehen, die einen geringen Reibungskoeffizienten besitzen. Die Techniken können direkt auf der Stahloberfläche oder einer beschichteten Oberfläche angewendet werden.

Die US-Patentschrift US-5,840,132 offenbart verschiedene Ausführungsformen von Verfahren für die Selbstschmierung von Bor enthaltenden und/oder Boride enthaltenden Materialien. Ferner werden Werkzeuge oder Komponenten offenbart, die die Selbstschmierung verwenden. Die Werkzeuge werden z.B. für das Flachwalzen, Formwalzen, das Ziehen von Drähten, das Ziehen von Röhren, die Extrusion von Festkörpern, die Extrusion von Röhren oder das Umformen eingesetzt. Hierzu weißt die Randschicht des Werkzeugs eine Borsäureschicht auf.

Das deutsche Gebrauchsmuster DE 20 2004 001 984 U1 offenbart ein Rollenkette mit Bolzen, Buchsen, Rollen, Innenlaschen und Außenlaschen, bei der jeweils zwei Buchsen durch mindestens zwei Innenlaschen miteinander verbunden sind und dadurch ein Kettenglied bilden. In jeder Buchse ist eine Rolle drehbar gelagert, wobei jeweils zwei aufeinanderfolgende Kettenglieder dadurch gelenkig miteinander verbunden sind. Eine dem entsprechenden Bolzen zugewandte innere Oberfläche jeder Buchse ist boriert.

Die deutsche Offenlegungsschrift DE 198 22 928 A1 betrifft ein Verfahren zum haftenden Aufbringen einer Beschichtung auf eine tribologisch beanspruchte Oberfläche eines Kettenglieds sowie entsprechendes Kettenglied. Die Beschichtung weist eine im Einsatzfall Borsäure aufweisende Schmierstoffschicht auf. Zur Herstellung wird das Kettenglied in einen Reaktor eingebaut und der Reaktor evakuiert. Zur Herstellung einer Haftvermittlerschicht wird anschließend ein Prozessgas eingeleitet, das Bor, Stickstoff und/oder Kohlenstoff zumindest als Verbindung aufweist oder bei Prozessbedingungen das entsprechende Element freigibt und im Bereich der Oberfläche des Kettenglieds eindringt. Zur Herstellung einer Bor und Sauerstoff aufweisenden Zwischenschicht wird ein Bor zumindest als Verbindung aufweisendes und bei Prozessbedingungen das Bor freigebendes zweites Vormaterial und ein Sauerstoff zumindest als Verbindung aufweisendes und bei Prozessbedingungen den Sauerstoff freigebendes erstes Vormaterial in die abscheidende Gasphase eingeleitet. Spätestens im Einsatzfall wird zumindest teilweise das Bor und der Sauerstoff der Zwischenschicht zumindest im Bereich ihrer frei zugänglichen Oberfläche unter Zuhilfenahme von Wasserstoff zu Borsäure als Trockenschmiermittel umgewandelt.

Die US-Patentschrift US-8,012,274 B2 beschreibt ein Verfahren zur Herstellung von chirurgischen Instrumenten oder dergleichen, die gegen Abnutzung widerstandsfähig sind. Zumindest ein Teil der Oberfläche des Werkstücks ist mit einer Schicht aus einem Borid versehen. Hierzu wird das Metall des Instruments in einem Teil des Reaktors einer Plasmabehandlung mit KBX₄ unterzogen, wobei X ein Halogen ist. In einem anderen Teil des Reaktors erfolgt dann die thermische Dekomposition der KBX₄- Verbindung.

Die Übersetzung der europäischen Patentschrift EP 0 416 947 B1 offenbart ein gesintertes eisenhaltiges Gleitmaterial mit einem borierten Oberflächenbereich, der eine erste Pororität von 5% oder weniger hat und wenigstens teilweise in sich eine 10 bis 150 µm dicke Boridschicht aufweist.

Der Erfindung liegt die Aufgabe zugrunde, ein - insbesondere im Hinblick auf Verschleißfestigkeit, Korrosionsbeständigkeit und hinsichtlich der Reibung - verbessertes Kettenelement anzugeben.

Diese Aufgabe wird erfindungsgemäß durch ein Kettenelement der eingangs genannten Art gelöst, das die Merkmale des Anspruchs 1 umfasst.

Eine weitere Aufgabe der Erfindung ist, ein Verfahren zu schaffen, mit dem auf kostengünstige, einfache und für die Massenproduktion geeignete Art und Weise ein Schmiermittel auf ein Kettenelement für eine Kette aufgebracht werden kann.

Diese Aufgabe wird erfindungsgemäß durch ein Verfahren für die Herstellung eines Kettenelements gelöst, das die Merkmale des Anspruchs 7 umfasst.

Das erfindungsgemäße Kettenelement weist ein Grundmaterial auf, wobei eine Borsäure-enthaltende Schicht vorhanden ist, die eine Oberfläche des Kettenelements bildet und durch komplette oder teilweise Umwandlung einer Boroxid-enthaltenden Schicht in Anwesenheit von Feuchtigkeit gebildet ist, wobei diese Boroxid-enthaltende Schicht während einer Wärmebehandlung einer auf dem Grundmaterial vorgesehenen metallischen Borid-Schicht umfassend ein Metall M in Anwesenheit von Sauerstoff entstanden ist, und wobei die Boroxid-enthaltende Schicht sowie die Borsäure-enthaltende Schicht das Metall M enthalten.

Das erfindungsgemäße Kettenelement hat den Vorteil, dass eine äußere Schicht, die eine Borsäure-enthaltende Schicht ist, zur Reibungsreduzierung die grundlegenden Eigenschaften der ursprünglich auf dem Grundmaterial aufgebrachten und zumindest teilweise umgewandelten Borid-Schicht, wie zum Beispiel hoher Elastizitätsmodul, chemische Stabilität und große Härte, im Wesentlichen nicht verändert.

Das Kettenelement trägt die Borsäure-enthaltende Schicht an der Oberfläche des Kettenelements, wobei die Borsäure-enthaltende Schicht vorzugsweise eine laminare Kristallstruktur besitzt, die aus mehreren einzelnen Schichten aufgebaut ist. Die Borsäure-enthaltende Schicht besitzt dabei insbesondere eine Dicke (9D) von weniger als 2µm.

Das Kettenelement umfasst bevorzugt das Grundmaterial, auf dem in dieser Reihenfolge die metallische Borid-Schicht, die Boroxid-enthaltende Schicht und die Borsäure-enthaltende Schicht angeordnet sind.

Insbesondere ist das Grundmaterial metallisch, auf Kohlenstoff und Eisen basierend, ausgebildet. Bei dem Grundmaterial für das Kettenelement handelt es sich insbesondere um einen Stahl, wie z. B. SAE 1010, SAE 1012, SAE 8620, DIN 16MnCr5, bzw. dessen Grundgefüge, der in seinen Eigenschaften unverändert ist. Bevorzugt wird als Grundmaterial ein Werkstoff, d. h. insbesondere ein Stahl mit einem Kohlenstoffgehalt von ca. 0,8 Gew.-% verwendet. Ein, das Kettenelement bildende Grundmaterial kann beispielsweise auch aus Stählen vom Typ CK75 oder 100Cr6 gebildet sein.

Bei den hier aufgebrachten Boriden zur Ausbildung der metallischen Borid-Schicht handelt es sich um Verbindungen mit Metallen, von denen viele keramische Eigenschaften aufweisen. Die Veranschaulichung der Bindungsverhältnisse bei Boriden ist ein komplexeres Thema. Die Bindungsmodelle ändern sich mit steigendem Boranteil, wie im Folgenden kurz benannt (von niedrigem zu hohem Gehalt), wobei M das verwendete Metall bezeichnet. So gibt es Boride mit isolierten Boratomen, sogenannte borarme Boride (z.B. M₄B, M₃B, M₂B, M₅B₂, M₅B₃, M₇B₃). Weiterhin gibt es Boride mit Einfach- und Doppelketten von Boratomen. Es gibt auch Boride mit zweidimensionalen Netzwerken (MB₂, M₂B₅) und Boride mit dreidimensionalen Netzwerken (MB₄, MB₆, MB₁₂). Die Borid-Schicht wird mittels Erhitzen in einer Pulverschüttung aufgebracht.

Die metallische Borid-Schicht enthält in einer besonders bevorzugten Ausführungsform Vanadium als Metall M.

Dabei kann das Borid der Borid-Schicht ganz oder nur teilweise in die Boroxid-enthaltende Schicht umgewandelt sein, so dass am fertigen Kettenelement eine Borid-Schicht vorhanden sein kann, jedoch nicht mehr vorhanden sein muss.

Nachdem die Boroxid-enthaltende Schicht durch Umwandlung des Borids der Borid-Schicht gebildet ist, enthält die Boroxid-enthaltende Schicht neben dem Boroxid weiterhin das Metall M, insbesondere in oxidischer Form. Im Falle eines Metalls M in Form von Vanadium liegen in der Boroxid-enthaltenden Schicht demnach weiterhin Oxide des Vanadium, wie V₂O₃ und/oder V₂O₅, vor.

Nachdem die Borsäure-enthaltende Schicht durch Umwandlung des Boroxids der Boroxid-enthaltenden Schicht gebildet ist, enthält die Borsäure-enthaltende Schicht neben der Borsäure ebenfalls weiterhin das Metall M, insbesondere in oxidischer Form. Im Falle eines Metalls M in Form von Vanadium liegen in der Borsäure-enthaltenden Schicht demnach weiterhin Oxide des Vanadium, V₂O₃ und/oder V₂O₅, vor. Diese weisen eine hohe Verschleißresistenz auf.

Dabei kann das Boroxid der Boroxid-enthaltenden Schicht ganz oder nur teilweise in Borsäure umgewandelt sein, so dass am fertigen Kettenelement eine Boroxid-enthaltende Schicht vorhanden sein kann, jedoch nicht mehr vorhanden sein muss. Eine Kette umfassend mindestens ein erfindungsgemäßes Kettenelement, insbesondere in Form eines Kettenbolzens, hat sich bewährt. Aber auch andere erfindungsgemäße Kettenelemente in Form von Hülsen, Laschen, Kettengliedern, Rollen, Buchsen usw. können eingesetzt werden.

Das erfindungsgemäße Verfahren zur Herstellung eines Kettenelements umfassend ein Grundmaterial wird mit den folgenden Schritten durchgeführt:
- zunächst wird eine metallische Borid-Schicht umfassend ein Metall M mit einer Dicke auf eine Oberfläche des Grundmaterials des Kettenelements mittels Erhitzen in einer Pulverschüttung aufgebracht;
- während einer thermischen Behandlung des Grundmaterials und der darauf aufgebrachten metallischen Borid-Schicht ist Sauerstoff vorhanden, so dass zumindest ein Teil der metallischen Borid-Schicht in eine Boroxid-enthaltende Schicht einer Dicke umgewandelt wird; und
- zumindest aus einem Teil der Boroxid-enthaltenden Schicht wird in Anwesenheit von Feuchtigkeit eine Borsäure-enthaltende Schicht mit einer Dicke ausgebildet.

Das erfindungsgemäße Verfahren zur Herstellung eines Kettenelements hat den Vorteil, dass dadurch eine äußere Schicht zur Reibungsreduzierung auf dem Kettenelement geschaffen wird, die die grundlegenden Eigenschaften der Borid-Schicht, wie zum Beispiel hoher Elastizitätsmodul, chemische Stabilität und große Härte, im Wesentlichen nicht verändert.

Es werden Parameter für die thermische Behandlung des Grundmaterials und der darauf aufgebrachten Borid-Schicht in Anwesenheit von Sauerstoff bevorzugt eingestellt derart, dass die Boroxid-enthaltende Schicht mit einer Dicke ausgebildet wird, die kleiner ist als die Dicke der anfänglich aufgebrachten Borid-Schicht.

Ebenso werden Parameter für die Behandlung der auf der Borid-Schicht beziehungsweise aus der Borid-Schicht gebildeten Boroxid-enthaltenden Schicht bevorzugt derart eingestellt, dass in Anwesenheit von Feuchtigkeit eine Borsäure-enthaltende Schicht mit der Dicke ausgebildet wird, deren Dicke bevorzugt kleiner ist als die Dicke der anfänglich ausgebildeten Boroxid-enthaltenden Schicht. Die Feuchtigkeit kommt dabei aus der gewöhnlichen Umgebungsatmosphäre. Es werden keine besonderen Umgebungsbedingungen gefordert.

Nach der Erzeugung der Boroxid-enthaltenden Schicht oder der Borsäure-enthaltenden Schicht werden die Kettenelemente auf 800°C aufgeheizt. Die 800°C werden für fünf Minuten gehalten. Die anschließende Abkühlung erfolgt bei normaler Umgebungsatmosphäre.

Mittels des Verfahrens können erfindungsgemäße Kettenelemente, insbesondere Kettenbolzen, hergestellt werden, die mit beispielsweise Kettengliedern zu einer Kette zusammengesetzt werden können.

Mithin kann das erfindungsgemäße Kettenelement z. B. ohne Weiteres unter den dort regelmäßig mechanisch wie auch korrosiv hoch beanspruchenden Betriebsbedingungen als Teil des Antriebsstrangs moderner Kraftfahrzeuge eingesetzt werden, wo es sich durch seine im Vergleich zu konventionellen Kettenelementen verbesserte Standzeit auszeichnet. Dies begründet sich insbesondere durch die vorgenannte erhöhte Verschleißfestigkeit gegenüber von im Betrieb des Kraftfahrzeugs entstehenden, aus Komponenten des Antriebsstrangs durch Verschleiß entstammenden abrasiven Partikeln, wie auch der erhöhten Korrosionsbeständigkeit gegenüber der, durch degradierte Schmiermittel bedingten korrosiven Umgebung der Randschicht des erfindungsgemäßen Kettenelements. Hinzu kommt nun noch der Vorteil, dass die äußere Randschicht des Kettenelements eine Borsäure-enthaltende Schicht trägt, die zusätzlich zu der Widerstandsfähigkeit des Bauteils auch die Reibung reduziert und sich somit der Verbrauch an Primärenergie reduziert.

Dies hat den Vorteil, dass durch den reduzierten Verbrauch die Umwelt geschont wird und die Kundenzufriedenheit steigt.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- Fig. 1: einen charakteristischen Ausschnitt einer Kette, umfassend mehrere Kettenelemente;
- Fig. 2: ein Kettenelement in Form eines Kettenbolzens zum Verbinden wenigstens zweier Kettenglieder einer Kette; und
- Fig. 3 - 6: die wesentlichen Verfahrensschritte während der Herstellung eines erfindungsgemäßen Kettenelements.

### Ausführliche Beschreibung der Zeichnungen

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

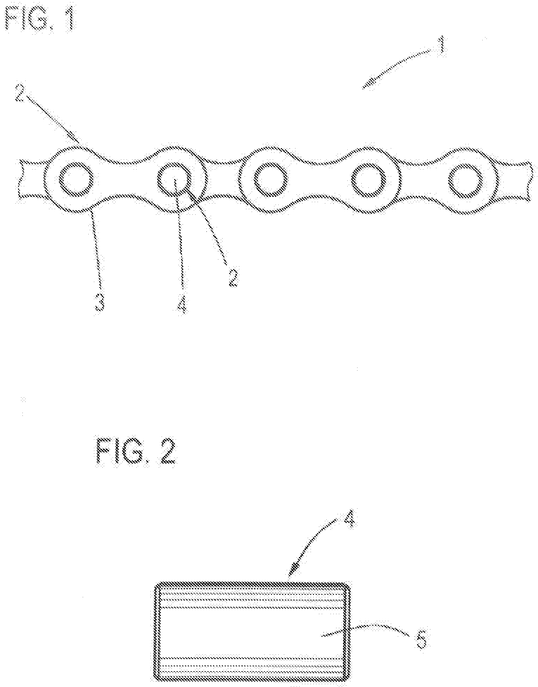

**Fig. 1** zeigt einen charakteristischen Ausschnitt einer Kette 1, umfassend mehrere Kettenelemente 2. Die Kette 1 kann als Zahnkette ausgebildet sein und so beispielsweise zur Kraftübertragung im Antriebsstrang oder als Teil des Antriebsstranges eines Kraftfahrzeugs dienen.

Ersichtlich umfasst die Kette 1 mehrere Kettenelemente 2 in Form von aufeinanderfolgend angeordneten, insbesondere laschenförmigen, Kettengliedern 3, welche über Kettenbolzen 4 miteinander verbunden sind. **Fig. 2** zeigt eine gesonderte Darstellung eines Kettenelements 2 in Form eines Kettenbolzens 4 gemäß Figur 1 in der Seitenansicht zum Verbinden wenigstens zweier Kettenglieder 3 einer Kette 1.

Die die Kette 1 bildenden Kettenelemente 2, das heißt die Kettenglieder 3 und die Kettenbolzen 4, sind aus einem metallischen, auf Kohlenstoff und Eisen basierenden Grundmaterial 5 gebildet. Bei dem Grundmaterial 5 für das Kettenelement 2 handelt es sich insbesondere um einen Stahl, wie z. B. SAE 1010, SAE 1012, SAE 8620, DIN 16MnCr5, bzw. dessen Grundgefüge, der in seinen Eigenschaften unverändert ist. Bevorzugt wird als Grundmaterial 5 ein Stahl mit einem Kohlenstoffgehalt von ca. 0,8 Gew.-% verwendet. Das Kettenelement 2 bildende Grundmaterial 5 kann beispielsweise auch aus Stählen vom Typ CK75 oder 100Cr6 gebildet sein.

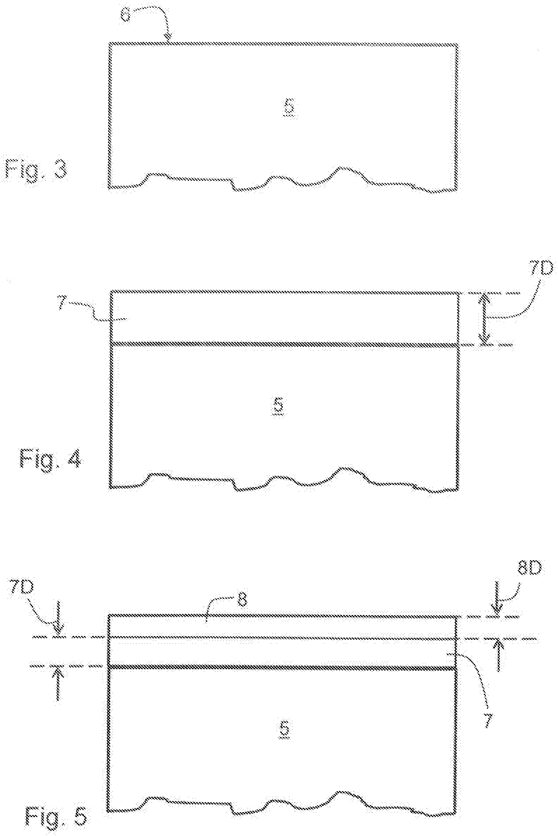

Die **Figuren 3** bis **6** beschreiben die verschiedenen Stadien des Herstellungsprozesses eines erfindungsgemäßen Kettenelements 2, indem ein Film an der Oberfläche 6 des Grundmaterials 5 gebildet wird. Zunächst wird das Grundmaterial 5 bereitgestellt (siehe **Figur 3**). In einem ersten Verfahrensschritt (siehe **Figur 4**) wird auf der Oberfläche 6 des Grundmaterials 5 eine Borid-Schicht 7 mit einer Dicke 7D aufgebracht. Bei den hier einsetzbaren Boriden handelt es sich um Verbindungen von Bor mit Metallen, von denen viele keramische Eigenschaften aufweisen. Die Veranschaulichung der Bindungsverhältnisse bei Boriden ist ein komplexeres Thema. Die Bindungsmodelle ändern sich mit steigendem Boranteil, wie im Folgenden kurz benannt (von niedrigem zu hohem Gehalt), wobei M das verwendete Metall bezeichnet. So gibt es Boride mit isolierten Boratomen, sogenannte borarme Boride (z.B. M₄B, M₃B, M₂B, M₅B₂, M₅B₃, M₇B₃). Weiterhin gibt es Boride mit Einfach- und Doppelketten von Boratomen. Es gibt auch Boride mit zweidimensionalen Netzwerken (MB₂, M₂B₅) und Boride mit dreidimensionalen Netzwerken (MB₄, MB₆, MB₁₂).

Die Borid-Schicht 7 wird hier aufgebracht, indem das Grundmaterial 5 in eine Pulverschüttung enthaltend FeV, NH₄Cl, B₄C und Al₂O₃ eingebettet und erhitzt wird. Dabei werden Behandlungstemperaturen im Bereich von 900 bis 1000°C über einen Zeitraum von 4 bis 10 Stunden zur Bildung der Borid-Schicht 7 auf dem Grundmaterial 5 eingesetzt. Nach dem Abkühlen des mit der Borid-Schicht 7 beschichteten Grundmaterials 5 erfolgt ein Temperschritt in Anwesenheit von Sauerstoff, wobei eine Oxidation der Oberfläche der Borid-Schicht 7 unter Ausbildung der Boroxid-enthaltenden Schicht 8 umfassend Boroxid erfolgt (siehe **Figur 5**). Es bildet sich auf der Borid-Schicht 7 eine Boroxid-enthaltende Schicht 8 mit einer Dicke 8D aus. Dabei erfolgt hier keine vollständige Umwandlung der Borid-Schicht 7 in eine Boroxid-enthaltende Schicht 8. Vielmehr verbleibt ein Teil der Borid-Schicht 7 zwischen dem Grundmaterial 5 und der Boroxid-enthaltenden Schicht 8 erhalten.

Alternativ ist während der Wärmebehandlung zur Verbindung des Grundmaterials 5 mit der Borid-Schicht 7 Sauerstoff anwesend, so dass zumindest ein Teil der Borid-Schicht 7 in ein Boroxid umgewandelt wird (siehe **Figur 5**). Es bildet sich auf der Borid-Schicht 7 eine Boroxid-enthaltende Schicht 8 mit einer Dicke 8D aus.

Die gebildete Borid-Schicht 7 weist dabei angrenzend an das Grundmaterial 5 hier eine Zusammensetzung auf, die Eisen, Vanadium, Kohlenstoff und Bor enthält, wobei das Metall M des Borids aus Vanadium gebildet ist. Angrenzend an die Boroxid-enthaltende Schicht 8 liegt eine Zusammensetzung der Borid-Schicht 7 vor, die lediglich noch Vanadium und Bor enthält.

Nachdem die Boroxid-enthaltende Schicht 8 durch Umwandlung des Borids der Borid-Schicht 7 gebildet ist, enthält die Boroxid-enthaltende Schicht 8 weiterhin Oxide des Metalls M, wobei M hier Vanadium ist. Es liegen hier in der Boroxid-enthaltenden Schicht 8 neben Boroxid (Bortrioxid B₂O₃) weiterhin Vanadiumoxide der Zusammensetzung V₂O₃ und/oder V₂O₅ vor.

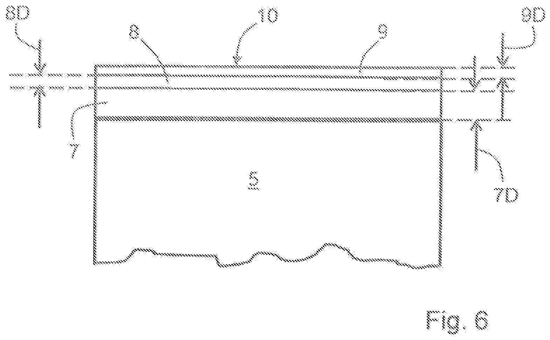

**Figur 6** veranschaulicht schematisch den dritten Schritt. Aus der erzeugten Boroxid-enthaltenden Schicht 8 wird unter Anwesenheit von Feuchtigkeit (Wasserdampf), eine Borsäure-enthaltende Schicht 9 mit einer Dicke 9D gebildet. Die Reaktionsgleichung ist wie folgt:

B₂O₃ + 3H₂O ↔ 2H₃BO₃ + 190,5 kJ

Durch die Wärmebehandlung der Borid-Schicht 7 wird die Boroxid-enthaltende Schicht 8 und aus dieser eine Borsäure-enthaltende Schicht 9 mit geringer Dicke 9D an der äußeren Oberfläche 10 des Kettenelements 2 ausgebildet. Die Borsäure-enthaltende Schicht 9 wirkt als Schmiermittel an der Oberfläche 10 des Kettenelements 2. Die Kristallstruktur der Borsäure-enthaltenden Schicht 9 ist triklinisch und die atomaren Schichten sind parallel. Die atomaren Schichten können gegeneinander abgleiten und wirken somit als ein Schmiermittel. Somit ist der Reibungskoeffizient von Borsäure klein.

Nachdem bereits die Boroxid-enthaltende Schicht 8 neben dem Boroxid auch Vanadiumoxide der Zusammensetzung V₂O₃ und/oder V₂O₅ enthält, liegen in der daraus gebildeten Borsäure-enthaltende Schicht 9 neben Borsäure (H₃BO₃) weiterhin diese Vanadiumoxide der Zusammensetzung V₂O₃ und/oder V₂O₅ vor.

Das Ausführungsbeispiel für das Kettenelement 2 gemäß Figur 6 zeigt demnach das Grundmaterial 5 mit einer Borid-Schicht 7, einer Boroxid-enthaltenden Schicht 8 und einer Borsäure-enthaltenden Schicht 9.

Die Kombination von hoher Oberflächenhärte (Borid-Schicht) mit einem geringen Reibungskoeffizient (Borsäure-enthaltende Schicht) resultiert in hervorragenden Abnutzungseigenschaften. Adhäsive und abrasive Abnutzungseigenschaften sind dadurch verbessert.

Alternativ könnte ein Kettenelement aber auch nur das Grundmaterial und darauf die Borsäure-enthaltende Schicht umfassen. Alternativ könnte ein Kettenelement weiterhin auch das Grundmaterial, darauf eine Boroxid-enthaltende Schicht und darauf die Borsäure-enthaltende Schicht umfassen. Schließlich könnte das Kettenelement auch das Grundmaterial, darauf die Borid-Schicht und darauf die Borsäure-enthaltende Schicht umfassen. Dies hängt davon ab, ob eine lediglich teilweise, d.h. oberflächliche, oder vollständige Umwandlung der Borid-Schicht in die Boroxid-enthaltende Schicht und/oder eine lediglich teilweise, d.h. oberflächliche, oder vollständige Umwandlung der Boroxid-enthaltenden Schicht in die Borsäure-enthaltende Schicht erfolgt ist.

### Bezugszeichenliste

- 1: Kette
- 2: Kettenelement
- 3: Kettenglied
- 4: Kettenbolzen
- 5: Grundmaterial
- 6: Oberfläche Grundmaterial
- 7: Borid-Schicht
- 7D: Dicke der Borid-Schicht
- 8: Boroxid-enthaltende Schicht (optional)
- 8D: Dicke der Boroxid-enthaltenden Schicht
- 9: Borsäure-enthaltende Schicht
- 9D: Dicke der Borsäure-enthaltenden Schicht
- 10: äußere Oberfläche des Kettenelements

## Patentansprüche

1. Kettenelement (2), insbesondere ein Kettenbolzen (4) zum Verbinden wenigstens zweier Kettenglieder (3), das ein Grundmaterial (5) aufweist, wobei eine Borsäure-enthaltende Schicht (9) vorhanden ist, die eine Oberfläche (10) des Kettenelements (2) bildet und durch komplette oder teilweise Umwandlung einer Boroxid-enthaltenden Schicht (8) in Anwesenheit von Feuchtigkeit gebildet ist, wobei diese Boroxid-enthaltende Schicht (8) während einer Wärmebehandlung einer auf dem Grundmaterial (5) vorgesehenen metallischen Borid-Schicht (7) umfassend ein Metall M in Anwesenheit von Sauerstoff entstanden ist, und wobei die Boroxid-enthaltende Schicht (8) sowie die Borsäure-enthaltende Schicht (9) das Metall M enthalten.

2. Kettenelement (2) nach Anspruch 1, wobei das Kettenelement (2) das Grundmaterial (5) umfasst, auf dem in dieser Reihenfolge die metallische Borid-Schicht (7), die Boroxid-enthaltende Schicht (8) und die Borsäure-enthaltende Schicht (9) angeordnet sind.

3. Kettenelement (2) nach einem der vorangehenden Ansprüche, wobei die Borsäure-enthaltende Schicht (9) an der Oberfläche (10) des Kettenelements (2) eine laminare Kristallstruktur besitzt, die aus mehreren einzelnen Schichten aufgebaut ist und die Borsäure-enthaltende Schicht (9) eine Dicke (9D) von weniger als 2µm besitzt.

4. Kettenelement (2) nach einem der vorangehenden Ansprüche, wobei das Grundmaterial (5) aus Stahl gebildet ist.

5. Kettenelement (2) nach einem der vorangehenden Ansprüche, wobei das Metall M Vanadium ist.

6. Kette (1) mit mindestens einem Kettenelement (2), insbesondere einem Kettenbolzen (4), nach einem der vorangehenden Ansprüche.

7. Verfahren zur Herstellung eines Kettenelements (2) umfassend ein Grundmaterial (5) mit den folgenden Schritten:
• dass zunächst eine metallische Borid-Schicht (7) umfassend ein Metall M mit einer Dicke (7D) auf eine Oberfläche (6) des Grundmaterials (5) des Kettenelements (2) mittels Erhitzen in einer Pulverschüttung aufgebracht wird;
• dass während einer thermischen Behandlung des Grundmaterials (5) und der darauf aufgebrachten metallischen Borid-Schicht (7) Sauerstoff vorhanden ist, so dass zumindest ein Teil der metallischen Borid-Schicht (7) in eine Boroxid-enthaltende Schicht (8) enthaltend das Metall M in einer Dicke (8D) umgewandelt wird; und
• dass zumindest aus einem Teil der Boroxid-enthaltenden Schicht (8) unter Anwesenheit von Feuchtigkeit eine Borsäure-enthaltende Schicht (9) enthaltend das Metall M mit einer Dicke (9D) ausgebildet wird.

8. Verfahren nach Anspruch 7, wobei Parameter für die thermische Behandlung des Grundmaterials (5) und der darauf aufgebrachten Borid-Schicht (7) unter Anwesenheit von Sauerstoff derart eingestellt werden, dass die Dicke (8D) der Boroxid-enthaltenden Schicht (8) kleiner ist als die Dicke (7D) der anfänglich aufgebrachten Borid-Schicht (7).

9. Verfahren nach Anspruch 8, wobei nach der Erzeugung der Boroxid-enthaltenden Schicht (8) die Kettenelemente (2) auf 800°C aufgeheizt, die 800°C für fünf Minuten gehalten und dann bei normaler Umgebungsatmosphäre abgekühlt werden.

10. Verfahren nach einem der Ansprüche 7 bis 9, wobei Parameter für die Behandlung der auf der Borid-Schicht (7) aufgebrachten Boroxid-enthaltenden Schicht (8) unter Anwesenheit von Feuchtigkeit derart eingestellt werden, dass die Dicke (9D) der Borsäure-enthaltenden Schicht (9) kleiner ist als die Dicke (8D) der anfänglich ausgebildeten Boroxid-enthaltenden Schicht (8).

## Claims

1. A chain element (2), in particular a chain pin (4) for connecting at least two chain links (3), having a base material (5), wherein a layer (9) containing boric acid is present, which forms a surface (10) of the chain element (2) and is formed by complete or partial conversion of a layer (8) containing boron oxide in the presence of moisture, wherein this boron oxide-containing layer (8) arises during a heat treatment of a metallic boride layer (7), provided on the base material (5), comprising a metal M in the presence of oxygen, and wherein the boron oxide-containing layer (8) and the boric acid-containing layer (9) contain the metal M.

2. The chain element (2) according to claim 1, wherein the chain element (2) comprises the base material (5) on which, the metallic boride layer (7), the boron oxide-containing layer (8), and the boric acid-containing layer (9) are arranged in this order.

3. The chain element (2) according to any one of the preceding claims, wherein the boric acid-containing layer (9) on the surface (10) of the chain element (2) has a laminar crystal structure which is composed of multiple individual layers and the boric acid-containing layer (9) has a thickness (9D) of less than 2 µm.

4. The chain element (2) according to any one of the preceding claims, wherein the base material (5) is formed of steel.

5. The chain element (2) according to any one of the preceding claims, wherein the metal M is vanadium.

6. A chain (1) with at least one chain element (2), in particular a chain pin (4), according to any one of the preceding claims.

7. A method for producing a chain element (2) comprising a base material (5),
having the following steps:
• first a metallic boride layer (7) comprising a metal M with a thickness (7D) being applied to a surface (6) of the base material (5) of the chain element (2) by heating in a powder bed;
• oxygen being present during a thermal treatment of the base material (5) and the metallic boride layer (7) applied thereon so that at least part of the metallic boride layer (7) is converted into a boron oxide-containing layer (8) containing the metal M in a thickness (8D); and
• at least a part of the boron oxide-containing layer (8), in the presence of moisture, forming a boric acid-containing layer (9) containing the metal M with a thickness (9D).

8. The method according to claim 7, wherein parameters for the thermal treatment of the base material (5) and the boride layer (7) applied thereon, in the presence of oxygen, are set such that the thickness (8D) of the boron oxide-containing layer (8) is smaller than the thickness (7D) of the initially applied boride layer (7).

9. The method according to claim 8, wherein after the formation of the boron oxide-containing layer (8), the chain elements (2) are heated to 800°C, held at 800°C for five minutes, and then cooled in a normal ambient atmosphere.

10. The method according to any one of claims 7 to 9, wherein parameters for the treatment of the boron oxide-containing layer (8) applied to the boride layer (7) in the presence of moisture are set such that the thickness (9D) of the boric acid-containing layer (9) is smaller than the thickness (8D) of the initially formed boron oxide-containing layer (8).

## Revendications

1. Élément de chaîne (2), en particulier un tourillon de chaîne (4) pour relier au moins deux maillons de chaîne (3), lequel élément présente un matériau de base (5) dans lequel est présente une couche (9) contenant de l'acide borique, qui forme une surface (10) de l'élément de chaîne (2) et est formée par conversion complète ou partielle d'une couche (8) contenant de l'oxyde de bore en présence d'humidité, ladite couche (8) contenant de l'oxyde de bore produite lors du traitement thermique d'une couche de borure métallique (7) appliquée sur le matériau de base (5) comprenant un métal M en présence d'oxygène, et la couche contenant de l'oxyde de bore (8) et la couche contenant de l'acide borique (9) contenant le métal M.

2. Élément de chaîne (2) selon la revendication 1, l'élément de chaîne (2) comprenant le matériau de base (5) sur lequel sont disposées dans cet ordre la couche de borure métallique (7), la couche contenant de l'oxyde de bore (8) et la couche contenant de l'acide borique (9).

3. Élément de chaîne (2) selon l'une des revendications précédentes, la couche contenant de l'acide borique (9) sur la surface (10) de l'élément de chaîne (2) possèdant une structure cristalline laminaire qui est composée de plusieurs couches individuelles et la couche contenant de l'acide borique (9) ayant une épaisseur (9D) inférieure à 2µm.

4. Élément de chaîne (2) selon l'une des revendications précédentes, le matériau de base (5) étant en acier.

5. Élément de chaîne (2) selon l'une des revendications précédentes, le métal M étant le vanadium.

6. Chaîne (1) comprenant au moins un élément de chaîne (2), notamment un tourillon de chaîne (4), selon l'une des revendications précédentes.

7. Procédé de fabrication d'un élément de chaîne (2) comprenant un matériau de base (5) selon les étapes suivantes :
• une couche de borure métallique (7) comprenant un métal M d'une épaisseur (7D) est d'abord appliquée sur une surface (6) du matériau de base (5) de l'élément de chaîne (2) par chauffage sur un lit de poudre ;
• de l'oxygène est présent lors d'un traitement thermique du matériau de base (5) et de la couche de borure métallique (7) appliquée dessus, de sorte qu'au moins une partie de la couche de borure métallique (7) soit transformée en une couche contenant de l'oxyde de bore (8) contenant le métal M dans une épaisseur (8D) ; et
• à partir d'au moins une partie de la couche contenant de l'oxyde de bore (8), en présence d'humidité, se forme une couche contenant de l'acide borique (9) contenant le métal M avec une épaisseur (9D).

8. Procédé selon la revendication 7, les paramètres pour le traitement thermique du matériau de base (5) et de la couche de borure (7) appliqués sur celui-ci en présence d'oxygène sont fixés de telle sorte que l'épaisseur (8D) de la couche contenant de l'oxyde de bore (8) soit inférieure à l'épaisseur (7D) de la couche de borure initialement appliquée (7).

9. Procédé selon la revendication 8, après la production de la couche contenant de l'oxyde de bore (8), les éléments de chaîne (2) étant chauffés à 800 °C, maintenus à 800 °C pendant cinq minutes puis refroidis dans une atmosphère ambiante normale.

10. Procédé selon l'une des revendications 7 à 9, les paramètres pour le traitement de la couche contenant de l'oxyde de bore (8) appliquée sur la couche de borure (7) en présence d'humidité sont fixés de telle sorte que l'épaisseur (9D) de la couche contenant de l'acide borique (9) soit inférieure à l'épaisseur (8D) de la couche contenant de l'oxyde de bore initialement appliquée (8).
